# EUROPEAN PATENT SPECIFICATION

(11) **EP 4 481 362 B1**
(45) Date of publication and mention of the grant of the patent: **12.08.2026**
(21) Application number: 23180048.3
(22) Date of filing: 19.06.2023
(51) Int. Cl.: G01N 1/22

(54) **A METHOD FOR REMOVING CONDENSATE FROM EXHAUST GAS MEASURING DEVICE AND AN EXHAUST GAS MEASURING DEVICE**
VERFAHREN ZUR KONDENSATENTFERNUNG AUS EINER ABGASMESSVORRICHTUNG UND ABGASMESSVORRICHTUNG
PROCÉDÉ D'ÉLIMINATION DE CONDENSAT D'UN DISPOSITIF DE MESURE DE GAZ D'ÉCHAPPEMENT ET DISPOSITIF DE MESURE DE GAZ D'ÉCHAPPEMENT

(43) Date of publication of application: 25.12.2024
(73) Proprietor: ATAL s.r.o., 39001 Tábor (CZ)
(72) Inventor: Horejsi, Josef, 39161 Oparany (CZ); Kotaska, Milan, 39133 Jistebnice (CZ); Freitag, Petr, 39155 Chynov (CZ); Chlada, Stanislav, 39155 Chynov (CZ); Mendl, Vladimir, 39001 Tabor (CZ)
(74) Representative: Sedlák, Jirí

(56) References cited:
- EP-A1- 4 006 522
- EP-A2- 1 008 842
- US-A1- 2021 156 818

## Description

### Field of the Invention

The invention relates to a method for removing condensate from exhaust gas measuring device used to evaluate vehicle performance, in particular during mandatory periodic technical inspection of a road vehicle. The invention includes an exhaust gas measuring device using the invented method for removing condensate.

### Background of the Invention

Documents US2021156818A1 and EP4006522A1 represent the state of the art for the present invention.

In the current era of combustion engines, exhaust gases are measured when evaluating vehicle performance, in particular during mandatory periodic technical inspection of a road vehicle. A special device is used to measure exhaust gases, which uses a sampling probe to take exhaust gases directly from the vehicle exhaust, then their composition is analysed in specialized measuring devices to evaluate whether the exhaust gases produced by the vehicle are or are not within the values set by standard.

It is well known that, in addition to gaseous products of combustion, other components of exhaust gases include water vapour, solid particles (e.g. soot, dust, etc.) and liquid particles (oil, unburned fuel, etc.). In order not to degrade specialized measuring components due to the above-mentioned pollutant components of exhaust gases, exhaust gas measuring devices are equipped with solid particle filters and separators that separate these impurities from the sample of exhaust gases supplied by the sampling probe.

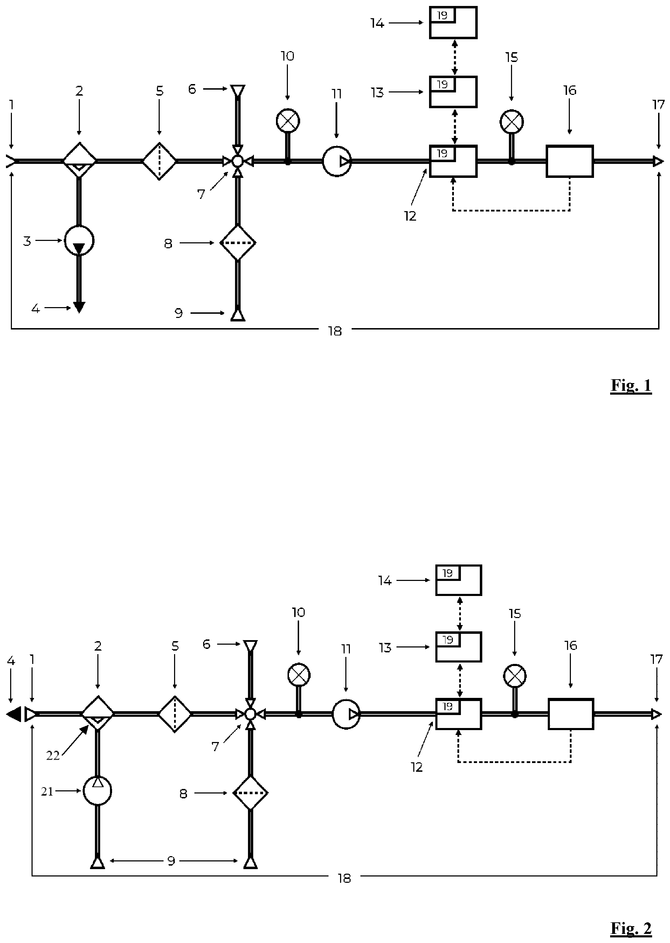

A block diagram of the existing exhaust gas measuring device is shown in Fig. 1, showing that the exhaust gas condensate separator 2 is arranged immediately downstream of the sampling probe 1 from the point of view of the path of exhaust gases from the exhaust towards the technological means for performing the analysis of the sample of exhaust gases in the exhaust gas measuring device 18. It can also be seen from Fig. 1 that the separator 2 is connected to the condensate drain 4 through the pump 3 for draining the condensate from the separator 2.

The importance of the condensate separator is great, because international regulations recommend that the condensate must not pass through any part (technological means for performing the analysis) of the exhaust gas measuring device that could become dirty. It is therefore essential to drain the condensate from the separator regularly and efficiently.

At the same time, international regulations recommend leak testing of exhaust gas measuring device before use, while operational experience shows that the pump that pumps the condensate from the separator to the condensate drain is the weakness in the background of the invention. Condensate causes films to settle on the wetted surfaces, and the deposit of these films will be released from time to time and will damage the tightness of the pump for removing condensate from the separator. According to measurement standards, measurements are not allowed without the properly sealed pump.

The above disadvantage is currently addressed by purging the pump and separator with a cleaning agent, but this method of maintenance of the exhaust gas measuring device is complex and expensive, including the fact that chemical cleaners that are aggressive to the environment and human health are used.

The second known shortcoming of exhaust gas measuring device from operational experience is that if the sampling probe is immersed in water resulting in continuous suction of water into the device by the sampling probe due to the active suction of the device, with subsequent flooding of the separator, which can cause water to penetrate downstream of the separator, causing damage to the device.

The object of the invention is to create a method for removing condensate from exhaust gas measuring device. The second object of the invention is the creation of an exhaust gas measuring device enabling the implementation of the invented method in such a way that it does not encounter malfunctions of the pump for draining the condensate from the separator, and which would be immune to the sampling probe immersed in water.

### Summary of the Invention

The object is achieved by creating a method for removing condensate from exhaust gas measuring device and further by creating an exhaust gas measuring device implementing a new method according to the invention below.

The summary of the invented method is based on the mixture of condensate and solid particles blown out of the separator through the sampling probe with a stream of working gas. Blowing the mixture of condensate and solid particles through the sampling probe does not contaminate any sensitive components of the exhaust gas measuring device.

In addition, the absence of pumping out the mixture of condensate and solid particles out of the separator by the pump protects the device from flooding, e.g. when the sampling probe is immersed in water, because when the separator is about to be filled, the suction of the sample into the device is interrupted and the contents of the separator are blown out of the device through the sampling probe.

At the same time, it is advantageous that blowing the mixture of condensate and solids through the sampling probe moves the undesirable formation of films from the mixture into the inside of the sampling probe upstream of the separator in the direction of the flow of the sample of exhaust gases, which itself is considered a contaminated area from the very beginning, since the sampling probe slides into vehicle exhausts, so the sampling probe is adapted to this purpose, and thus the passage of the mixture of condensate and solid particles through the sampling probe poses no threat to the exhaust gas measuring device.

Within the scope of the invented method, it is advantageous if the blowing is implemented on the basis of comparing the currently detected amount of the mixture of condensate and solid particles in the separator with the predefined value. By measuring the amount of the mixture of condensate and solid particles in the separator, blowing is implemented exactly as needed, thus saving energy.

Alternatively, within the scope of the invented method, it is advantageous if the blowing takes place during the mandatory technological break in the measurement of exhaust gases. Before each measurement, the device must undergo so-called "zeroing", which involves the opportunity to completely empty the separator as a precaution, regardless of its filling with the mixture of condensate and solid particles.

The invention includes an exhaust gas measuring device.

The exhaust gas measuring device can be divided into three units according to their subfunctions. In terms of unique sub-function, the first unit is the sampling probe for the suction of the sample of exhaust gases. The sampling probe is inserted into the exhaust of the vehicle under test, from which the sample of exhaust gases is taken for analysis. The second unit of the exhaust gas measuring device according to the sub-function is the separator for the mixture of condensate and solid particles, which is arranged downstream of the sampling probe in the direction of the flow of the sample of exhaust gases through the device. The separator protects sensitive parts of the exhaust gas measuring device from contamination with condensate and solid particles. A drain for the mixture of condensate and solid particles is connected to the separator for emptying it. The last unit according to the sub-function includes other technological means for measuring the sample of exhaust gases, which are safely arranged downstream of the separator in the direction of the flow of the sample of exhaust gases through the device. At the same time, one of the other technological means is the integrated gas pump for removing the sample of exhaust gases out of the sampling probe deeper into the exhaust gas measuring device.

The summary of the invention is based on the sampling probe being simultaneously a drain for the mixture of condensate and solid particles. This brings the benefit that the sampling probe is adapted to the dirty environment of thereby exposure to the mixture of condensate and solid particles cannot endanger it in any way. At the same time, at least one means for the supply of working gas is connected to the separator to blow the mixture of condensate and solid particles out of the separator through the sampling probe. Blowing out the mixture of condensate and solid particles is preferred as there is no need for a specialized pump for removing condensate from the separator known from the background of the invention, which has so far been considered weakness of all known exhaust gas measuring devices. The absence of the specialized pump not only simplifies the resulting device, but at the same time increases the reliability of the device from the point of view of leak tests. In addition, blowing the mixture of condensate and solid particles through the sampling probe is much more permeable in terms of flow than in the existing solutions with pumps.

A great advantage of the invention is its simplicity, reliability and improved unbreakability compared to the state of the art. The invention is completely resistant to immersion of the sampling probe in water, because in the case of full separator, the suction of water through the sampling probe is interrupted in order to empty the contents of the separator by blowing out through the sampling probe.

The separator is preferably equipped with a fill level sensor to measure the current amount of the mixture of condensate and solid particles in the separator. Although it is possible to adjust the capacity of the separator to the amount of the separated mixture of condensate and solid particles during exhaust gas measurement on the basis of many years of experience, measuring the current amount of the mixture of condensate and solid particles in the separator can protect the exhaust gas measuring device from unexpected anomalies.

The advantages of the invention include increased operational resistance, in particular when the sampling probe is immersed in water, as well as simplicity and reliability. Removing the specialized pump for removing condensate from the separator according to the background of the invention will remove the faulty component of the exhaust gas measuring device. In addition, blowing will remove solid particles from the separator, which would not be removed by the pumping of condensate using the pump, because solid particles must not pass through the pump as mentioned at the beginning of the text.

### Explanation of drawings

The present invention will be explained in detail by means of the following figures where:
- Fig. 1: shows a general exhaust gas measuring device with a pump for removing condensate from a condensate separator according to the background of the invention,
- Fig. 2: shows a diagram of the exhaust gas measuring device according to the invention with a secondary gas pump,
- Fig. 3: shows a diagram of the exhaust gas measuring device according to the invention using an integrated gas pump to blow out the separator of the mixture of condensate and solid particles.

### Example of the invention embodiments

Fig. 1 shows the exhaust gas measuring device 18 according to the background of the invention. The device 18 can be divided according to the functions into three units, where the first unit is used to take the sample of exhaust gases from the road vehicle exhaust - so-called sampling probe 1. The sampling probe 1 is basically a hose that has the diameter smaller than the outlet diameter of the road vehicle exhaust. One end of the sampling probe 1 is connected to the inlet of the separator 2 for the mixture of condensate and solid particles. The free end of the sampling probe 1 is inserted into the road vehicle exhaust.

The separator 2 for the mixture of condensate and solid particles is basically a vessel inside which there is a coarse filter. Liquid and solid particles contained in the supplied sample of exhaust gases precipitate on the coarse filter, while the sample of exhaust gases is drawn deeper into the device 18 through the outlet of the separator 2. The coarse filter can separate solid particles from the size of approximately 20 µm. The volume of the separator 2 is adjustable, but is usually in the order of tens to hundreds of ml. The pump 3 is connected to the separator 2, which pumps the condensate from the separator 2 to the condensate outlet 4.

The last unit according to the function includes other technological means of the device 18, their combination will enable the analysis of the sample of exhaust gases. These other technological means include the gas filter 5, which is arranged on the gas line downstream of the separator 2 in the direction of the flow of the sample of exhaust gases through the device 18. The gas filter 5 captures the particles that penetrated the coarse filter of the separator 2. The multi-way valve 7 is arranged downstream of the gas filter 5 on the gas line. The multi-way valve 7 has several functions. Firstly, it will allow the sample of exhaust gases to flow deeper into the device 18. Secondly, it will allow the supply of reference gas from the inlet 6 deeper into the device 18 to set up the analysers. And lastly, it will allow the device 18 to be zeroed by purging, which will be provided by the stream of working gas supplied from the working gas inlet 9. As for the reference gas, it is a set of calibration gases in specific concentrations prescribed in the general requirements for the measuring device. The working gas is air that is purified through the carbon filter 8, which is arranged on the working gas line to the multi-way valve 7. The integrated gas pump 11 is arranged downstream of the multi-way valve 7 on the gas line. It is the electrically driven diaphragm pump. The measuring apparatus 12 is arranged downstream of the integrated gas pump 11 on the gas line, which can, for example, analyse the presence and amount of CO, CO₂ and HC in the sample of exhaust gases. The measuring apparatus 12 is an electronic device that works according to the instructions contained in the software module 19 stored on its memory chip. The display 13 communicates with the measuring apparatus 12 for displaying the collected information to the user in an understandable form, as well as the user interface 14, e.g. in the form of control panel for user interaction with the device 18. The display 13 and the user interface 14 are also equipped on their internal memory chip with the software module 19 for controlling their operation according to the instructions contained in the software. The oxygen sensor 16 communicates with the measuring apparatus 12, which measures the oxygen concentration in the sample of exhaust gases. The atmospheric pressure sensor 15 is between the measuring apparatus 12 and the oxygen sensor 16 on the gas line. Behind the oxygen sensor 16, the gas line for conducting the sample of exhaust gases is closed by the gas outlet 17 to the surrounding area.

The expert will be able to find another set of other technological means fulfilling the same purpose, which is the measurement of exhaust gases, in the background of the invention. The specific design of this measuring part of the device 18 is not crucial from the point of view of the summary of the invention, because all variants of the other technological means used for carrying out the measurement are protected by the common requirement, i.e. the other technological means are not exposed to the mixture of condensate and solid particles contained in the exhaust gases.

### Example 1

Fig. 2 shows one possible embodiment of the invented exhaust gas measuring device 18. The main difference is in the separator 2, to which the secondary gas pump 21 is connected. The secondary gas pump 21 is connected to the working gas inlet 9. At the same time, the sampling probe 1 fulfils the role of drainage 4 of the mixture of condensate and solid particles.

This design of the inlet part of the device 18 allows the separator 2 to be emptied by pressure of the working gas. Working gas pressure is provided by the secondary gas pump 21.

At the same time, the fill level of the separator is monitored by the fill level sensor 22 of the separator 2, continuously to protect the device 18 from contamination.

### Example 2

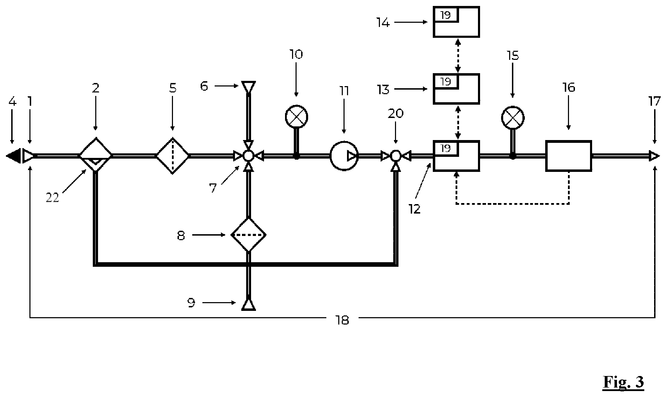

Fig. 3 shows another possible embodiment of the invented device 18. The main difference can be seen in that the gas line from the drain valve 20 is connected to the separator 2. The drain valve 20 directs the flow of gas through the gas line according to the current situation. It either lets the sample of exhaust gases flow towards the meter 12 or, when zeroing, lets the working gas flow from the inlet 9 towards the separator 2 to blow the mixture of condensate and solid particles out of the separator 2. At the same time, the multi-way valve 7 cooperates with the drain valve 20, which lets either the sample of exhaust gases, the working gas, or the reference gas into the gas line towards the drain valve 20.

The switching of the drain valve 20 and the multi-way valve 7 is controlled based on the fill level of the separator 2, in which the current amount of the mixture of condensate and solid particles is monitored by means of the electronic fill level sensor 22 of the separator 2.

Working gas pressure to expel the mixture of condensate and solid particles from the separator 2 is provided by the integrated gas pump 11.

### Example 3

In another possible non-illustrated embodiment of the invented device 18, the gas line from the working gas inlet 9 is connected to the separator 2. The working gas is pressurized from an external source, e.g. from a bottle with compressed working gas, or from a compressor, etc., while the gas line between the working gas inlet 9 to the device 18 and the separator 2 is fitted with a one-way valve.

The method for removing condensate from the exhaust gas measuring device 18 is very simple, but extremely effective and almost unbreakable. The sampling probe 1 is used to remove condensate, while performing the function of drain 4 for the mixture of condensate and solid particles. The direction of flow through the sampling probe 1 is basically changed, so that instead of drawing the sample of exhaust gases into the device 18, the working gas is driven through the separator 2 towards the mouth of the sampling probe 1, expelling the mixture of condensate and solid particles out of the device 18 through the sampling probe 1.

The operation of blowing the mixture of condensate and solid particles out of the separator 2 is activated either according to the current amount of the mixture contained in the separator 2, or according to preset commands based on time data, or on the progressive steps of working with the device 18, or combination thereof.

If it concerns the activation of blowing according to the fill level of the separator 2, then the level of the mixture of condensate and solid particles is actively measured, for example, by the fill level sensor 22. As soon as the level of the mixture reaches the threshold value, the blowing of the mixture out of the separator 2 is activated. In the course of blowing process, the multi-way valve 7 is closed so that the mixture escapes through only one possible path, which is through the sampling probe 1.

In the case of programmed instructions for blowing out the mixture of condensate and solid particles according to time data or according to the progressive steps of the measurement of exhaust gases by the device 18, the blowing is performed during the zeroing of the device 18. Zeroing refers to the purging of the measuring elements with working gas to blow out all residues of the sample of exhaust gases from the previous measurement.

The so-called zeroing process is carried out between individual measurements, which takes approximately 20 seconds. Practical tests of the prototype created according to the invention show that it is possible to blow the mixture out of the separator 2 within 10 seconds. It is therefore clear that the invented process of blowing out the mixture of condensate and solid particles does not significantly extend the measurement cycle of the device 18.

In another embodiment of the invention, the invented method is used to prepare the gas sample for the analysis of exhaust gases both by the NDIR (non-dispersive infrared) method and by analysing the concentration of nanoparticles, e.g. by the CPC (condensation particle counter) DC (diffusion charging) method.

### Industrial applicability

The method for removing condensate from the exhaust gas measuring device and the exhaust gas measuring device according to the invention will find their application in performance testing of road vehicles, in particular during mandatory technical inspections.

### List of reference numerals

- 1: sampling probe
- 2: separator for the mixture of condensate and solid particles
- 3: pump
- 4: drain for the mixture of condensate and solid particles
- 5: gas filter
- 6: reference gas inlet
- 7: multi-way valve
- 8: carbon filter
- 9: working gas inlet
- 10: differential pressure sensor
- 11: gas pump
- 12: measuring apparatus
- 13: display
- 14: user interface
- 15: atmospheric pressure sensor
- 16: oxygen sensor
- 17: gas outlet
- 18: exhaust gas measuring device
- 19: software module
- 20: drain multi-way valve
- 21: secondary gas pump
- 22: fill level sensor of the separator for the mixture of condensate and solid particles

## Claims

1. A method for removing condensate from an exhaust gas measuring device (18) for measuring exhaust gases equipped with a sampling probe (1) for supplying a sample of exhaust gases to the device (18), and further equipped with a separator (2) for separating the mixture of condensate and solid particles from the sample of exhaust gases, **characterized in that** the mixture of condensate and solid particles is blown out of the separator (2) through the sampling probe (1) with a stream of working gas.

2. The method according to claim 1, **characterized in that** the blowing is implemented on the basis of comparing the currently detected amount of the mixture of condensate and solid particles in the separator (2) with a predefined fill level of the separator (2).

3. The method according to claim 1, **characterized in that** blowing takes place during the mandatory technological break in the measurement of exhaust gases.

4. An exhaust gas measuring device (18) for implementing the method according to any of claims 1 to 3, consisting of a sampling probe (1) for drawing in the sample of exhaust gases, further consisting of a separator (2) for the mixture of condensate and solid particles arranged downstream of the sampling probe (1) in the direction of the flow of the sample of exhaust gases through the device (18), further including a drain (4) for the mixture of condensate and solid particles connected to the separator (2) for its emptying, as well as other technological means of the exhaust gas measuring device (18) arranged downstream of the separator (2) in the direction of the flow of the sample of exhaust gases through the device (18), while one of the other technological means of the device (18) is a gas pump (11) for removing the sample of exhaust gases out of the sampling probe (1) deeper into the device (18), **characterized in that** the sampling probe (1) is simultaneously the drain (4) for the mixture of condensate and solid particles from the separator (2), and further that at least one means is connected to the separator (2) for the supply of working gas to blow the mixture of condensate and solid particles out of the separator (2) through the sampling probe (1).

5. The device according to claim 4, **characterized in that** the separator (2) is preferably equipped with a fill level sensor (22) to measure the current amount of the mixture of condensate and solid particles in the separator (2).

## Patentansprüche

1. Verfahren zum Abführen von Kondensat aus einer Abgasmesseinrichtung (18), die mit einer Probenahmesonde (1) zur Zufuhr einer Abgasprobe in die Einrichtung (18) und ferner mit einem Abscheider (2) zur Abscheidung einer Mischung aus Kondensat und Feststoffpartikeln aus der Abgasprobe ausgestattet ist, **dadurch gekennzeichnet, dass** die Mischung aus Kondensat und Feststoffpartikeln aus dem Abscheider (2) durch einen Arbeitsgasstrom über die Probenahmesonde (1) ausgeblasen wird.

2. Das Verfahren nach dem Anspruch 1, **dadurch gekennzeichnet, dass** das Durchblasen auf der Grundlage eines Vergleichs der aktuell erfassten Menge der Mischung aus Kondensat und Feststoffpartikeln im Abscheider (2) mit einem vorgegebenen Füllstand des Abscheiders (2) durchgeführt wird.

3. Das Verfahren nach dem Anspruch 1, **dadurch gekennzeichnet, dass** das Durchblasen während der obligatorischen technologischen Pause der Abgasmessung durchgeführt wird.

4. Abgasmessvorrichtung (18) zur Durchführung des Verfahrens nach einem der Ansprüche 1 bis 3, umfassend eine Probenahmesonde (1) zum Ansaugen einer Abgasprobe, ferner umfassend einen Abscheider (2) für eine Mischung aus Kondensat und Feststoffpartikeln, der in der Strömungsrichtung der Abgasprobe durch die Einrichtung (18) stromabwärts der Probenahmesonde (1) angeordnet ist, ferner umfassend einen mit dem Abscheider (2) verbundenen Auslass (4) für die Mischung aus Kondensat und Feststoffpartikeln zwecks der Entwässerung des Abscheiders, und ferner umfassend weitere technische Komponenten der Abgasmesseinrichtung (18), die in der Strömungsrichtung der Abgasprobe durch die Einrichtung (18) stromabwärts des Abscheiders (2) angeordnet sind, wobei eine der weiteren technischen Komponenten der Einrichtung (18) eine Gaspumpe (11) zum Ansaugen der Abgasprobe von der Probenahmesonde (1) weiter in die Einrichtung (18) hinein ist, **dadurch gekennzeichnet, dass** die Probenahmesonde (1) gleichzeitig als Auslass (4) für die Mischung aus Kondensat und Feststoffpartikeln aus dem Abscheider (2) dient, und ferner, dass mindestens eine Komponente zur Zufuhr von Arbeitsgas an den Abscheider (2) angeschlossen ist, um die Mischung aus Kondensat und Feststoffpartikeln durch die Probenahmesonde (1) aus dem Abscheider (2) herauszublasen.

5. Die Einrichtung nach dem Anspruch 4, **dadurch gekennzeichnet, dass** der Abscheider (2) mit einem Füllstandssensor (22) zur Messung der aktuellen Menge der im Abscheider (2) enthaltenen Mischung aus Kondensat und Feststoffpartikeln ausgestattet ist.

## Revendications

1. Procédé d'évacuation des condensats d'un dispositif (18) de mesure des gaz d'échappement équipé d'une sonde de prélèvement (1) destinée à acheminer un échantillon de gaz d'échappement vers le dispositif (18), et équipé en outre d'un séparateur (2) destiné à séparer le mélange de condensat et de particules solides de l'échantillon de gaz d'échappement, **caractérisé en ce que** le mélange de condensat et de particules solides provenant du séparateur (2) est expulsé par la sonde de prélèvement (1) avec le flux de gaz de travail.

2. Procédé selon la revendication 1, **caractérisé en ce que** la purge s'effectue sur la base d'une comparaison entre la quantité actuellement détectée du mélange de condensat et de particules solides dans le séparateur (2) et le niveau de remplissage prédéfini du séparateur (2).

3. Procédé selon la revendication 1, **caractérisé en ce que** la purge a lieu au cours de la pause technologique obligatoire dans la mesure des gaz d'échappement.

4. Dispositif (18) de mesure des gaz d'échappement destiné à la mise en œuvre du procédé selon l'une des revendications 1 à 3, composé d'une sonde de prélèvement (1) destinée à aspirer un échantillon de gaz d'échappement, composé en outre d'un séparateur (2) du mélange de condensat et de particules solides disposé en aval de la sonde de prélèvement (1) dans le sens d'écoulement de l'échantillon de gaz d'échappement à travers le dispositif (18), composé en outre d'une évacuation (4) du mélange de condensat et de particules solides raccordée au séparateur (2) pour sa vidange, ainsi que d'autres moyens techniques du dispositif (18) de mesure des gaz d'échappement disposés en aval du séparateur (2) dans le sens d'écoulement de l'échantillon de gaz d'échappement à travers le dispositif (18), l'un des autres moyens techniques du dispositif (18) étant une pompe à gaz (11) destinée à aspirer l'échantillon de gaz d'échappement depuis la sonde de prélèvement (1) plus profondément dans le dispositif (18), **caractérisé en ce que** la sonde de prélèvement (1) sert en même temps de conduit d'évacuation (4) du mélange de condensat et de particules solides provenant du séparateur (2), et en outre **en ce qu'**au moins un moyen d'alimentation en gaz de travail est raccordé au séparateur (2) pour expulser le mélange de condensat et de particules solides hors du séparateur (2) via la sonde de prélèvement (1).

5. Dispositif selon la revendication 4, **caractérisé en ce que** le séparateur (2) est équipé d'un capteur de niveau (22) destiné à mesurer la quantité actuelle du mélange de condensat et de particules solides présent dans le séparateur (2).
